# EUROPÄISCHE PATENTANMELDUNG

(11) **EP 0 778 552 A2**
(43) Veröffentlichungstag der Anmeldung: **11.06.1997**
(21) Anmeldenummer: 96117402.6
(22) Anmeldetag: 30.10.1996
(51) Int. Cl.: G07F 7/10, G07F 19/00

(54) **Verfahren und Vorrichtung zur Zahlung aus Chipkarten mit Börsenfunktion**

(30) Priorität: 07.12.1995 DE 19545705
(71) Anmelder: Deutsche Telekom AG, 53113 Bonn (DE)
(72) Erfinder: Korst, Uwe, Dipl.-Ing., 64625 Bensheim (DE); Backes, Helmut, Dipl.-Ing., 64807 Dieburg (DE)

(57) **Zusammenfassung**

Bei bekannten Verfahren zur Zahlung aus Chipkarten mit Börsenfunktion ist zum Schutz von Buchungsvorgängen der bei Kreditkarten übliche online-Betrieb zum Diensteanbieter (Kreditinstitut) notwendig. Die fest in nur abbuchenden Geräten integrierten Sicherheitsmodule sind wenig geschützt.

Es wird ein Verfahren mit einsteckbaren Sicherheitsmodulen und mit bei Bedarf geschalteten Fernmeldeverbindungen angegeben, bei dem ein besserer Schutz ohne aufwendige Standleitungen erreicht wird, sowie einige Vorrichtungen für unterschiedliche Anwendungsmöglichkeiten.

Die Ausführungsbeispiele lassen eine sehr vielseitige Anwendbarkeit bei diversen Formen der Zahlung aus Chipkarten mit Börsenfunktion erkennen.

## Beschreibung

Die Erfindung bezieht sich auf ein Verfahren der im Oberbegriff des Patentanspruchs 1 näher definierten Art und auf eine Vorrichtung der im Oberbegriff des Patentanspruchs 5 aufgeführten Art. Derartige Lösungen sind z. B. aus ETSI D/EN/TE 090114, Terminal Equipment (TE) Requirements for IC cards and terminals for telecommunication use, Part 4 - Payment methods Version 4 v. 07. Febr. 1992 und der Europäischen Patentanmeldung 0 605 070 bekannt.

Die gebräuchlichen Automaten zum Erbringen von Dienstleistungen arbeiten mit Münzen bzw. Geldscheinen als Zahlungsmittel. Nur wenige Automaten arbeiten mit dem Zahlungsmittel Karte. Derzeitig akzeptierte Karten sind hauptsächlich Magnetstreifenkarten.

Weiterhin sind Telefonkarten mit definiertem Anfangsguthaben als Zahlungsmittel für Kartentelefone auf dem Markt. Zukünftig gewinnen "elektronische Geldbörsen" nach dem gleichen Prinzip als Zahlungsmittel für begrenzte Beträge zunehmende Bedeutung. Für den Anwendungsfall "Bezahlen mit der Chipkarte" ist ein entsprechendes Kartenlesermodul mit einem Sicherheitsmodul SM zur Karten- und Guthabenprüfung in den Automaten gekoppelt. Bei den für begrenzte Beträge eingesetzten Chipkartenterminals erfolgt die Sicherheitsfunktion dadurch, daß das komplette Gerät gegen Angriffe von außen geschützt wird.

Aus der EP 0 605 070 A2 ist auch ein Verfahren zum Transferieren von Buchgeldbeträgen auf und von Chipkarten bekannt, bei dem überschreibbare Speicherplätze einer Chipkarte aufgeteilt werden in wenigstens zwei Speicherplätze, von denen einer als "debitorisch", also "elektronische Geldbörse" genutzt wird, so wie die Telefonkarten, und der andere "kreditorisch" im Sinne einer Kreditkarte. Unter den für Kreditkarten üblichen gesicherten Bedingungen ist es vorgesehen, Geldbeträge zwischen den Bereichen zu transferieren, um die "elektronische Geldbörse" wieder aufzufüllen. Zum Schutz dieser Vorgänge ist der bei Kreditkarten übliche online- Betrieb zum Diensteanbieter (Kreditinstitut) notwendig.

Für den online- Betrieb sind Standleitungen notwendig, die gegen Störungen und Fremdzugriffe besonders geschützt sein müssen, und deshalb für den Betreiber des Kassenautomaten mit solchen Möglichkeiten hohe Kosten verursacht. Weiterhin ist es bei den nur abbuchenden einfachen unbeaufsichtigten Automaten ein erheblicher Nachteil, daß deren Sicherheitsmodule fest im Gerät integriert sind, so daß sie nach Einbruch bzw. Gewaltanwendung in unbefugte Hände geraten können.

Aufgabe der Erfindung ist es, für die "elektronischen Geldbörsen" vielseitige Anwendungen ohne die erwähnten Nachteile zu ermöglichen.

Diese Aufgabe löst ein Verfahren entsprechend dem Kennzeichen des Patentanspruchs 1.

Vorteilhafte Aus- bzw. Weiterbildungsmöglichkeiten dieses Verfahrens sind in den Kennzeichen der Unteransprüche 2 - 4 aufgeführt.

Im Kennzeichen des Patentanspruchs 5 ist eine für die Anwendung des erwähnten Verfahrens geeignete Vorrichtung beschrieben.

Die Kennzeichen der Unteransprüche 6 - 8 nennen für verschiedene Anwendungen vorteilhafte Aus- bzw. Weiterbildungsmöglichkeiten dieser Vorrichtungen.

Die Erfindung ist mit ihren Wirkungen, Vorteilen und Anwendungsmöglichkeiten in den nachfolgenden Ausführungsbeispielen näher beschrieben. Die zugehörigen Zeichnungen zeigen einige Anwendungsmöglichkeiten der Erfindung, und zwar:
Fig. 1 für ein POS- (Kassen-) Terminal für Chipkarten,
Fig. 2 für ein Einbaumodul und
Fig. 3 für ein Anschaltegerät für Endeinrichtungen.

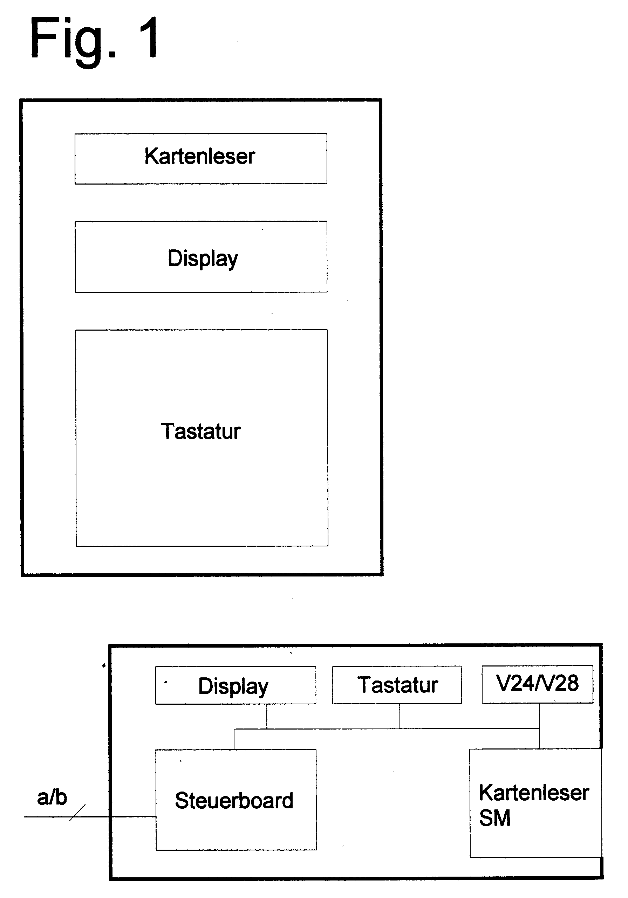

Das POS-Terminal entsprechend der Fig. 1 besteht aus einem Steuerbord, einem Telefonteil, einen Display, mindestens zwei Kartenlesern, davon ein Kartenleser für die Kundenschnittstelle und ein zweiter Kartenleser für ein steckbares Sicherheitsmodul und einer Tastatur. Die Sicherheitsfunktionen sind durch ein steckbares Sicherheitsmodul SM realisiert , wobei der komplette Vorgang Kartenprüfung, Guthabenanzeige, Abrechnung von dem Gerät durchgeführt werden kann.

Der Kunde steckt seine Karte in einen Kundenkartenleser. Darauf wird die Karte von dem Gerät eigenständig überprüft. Dabei findet mindestens eine Authentifikation mit dem Sicherheitsmodul statt. Die Überprüfung erfolgt mit Hilfe der Steuerkarte und der Kommunikation mit dem Kundenkartenleser sowie dem Sicherheitsmodul.

Das Vorhandensein einer gültigen Chipkarte wird dann vom Display entsprechend angezeigt. Weiterhin wird aus der Karte das vorhandene Restguthaben ausgelesen und angezeigt.

Danach wird über die Tastatur ein von der Karte abzubuchender Betrag eingegeben. Sofern die Karte über genügend Restguthaben verfügt, wird der Betrag von der Karte abgebucht und gleichzeitig wird ein entsprechender Zähler im Sicherheitsmodul erhöht. Dieser Zähler wird kryptografisch gesichert erhöht und repräsentiert jeweils die Summe aller von den Karten innerhalb eines Zeitraumes abgebuchter Geldbeträge.

Sofern auf der Karte nicht mehr genügend Restguthaben vorhanden ist, kann ggf. über die Telekommunikationsschnittstelle ein Verbindungsaufbau zu einem Rechner mit Sicherheitsmodul erfolgen, um weitere Geldbeträge auf die Chipkarte zu laden.

Die in dem Sicherheitsmodul abgespeicherten Zähler können über den eingebauten Telekommunikationsteil regelmäßig zur Abrechnung an eine Abrechnungszentrale übergeben werden.

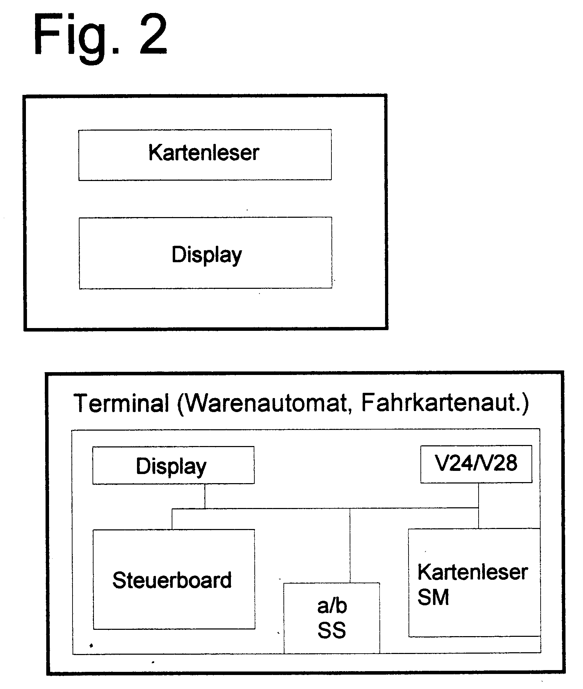

Die in Fig. 2 gezeigte Vorrichtung besteht aus einer Steuerkarte, einem Telefonteil, mindestens zwei Kartenlesern, davon ein Kartenleser für die Kundenschnittstelle und ein zweiter Kartenleser für ein steckbares Sicherheitsmodul und einer Tastatur sowie (nur optional) einem Display. Auch bei dieser Vorrichtung werden die Sicherheitsfunktionen durch ein steckbares SM realisiert, wobei der komplette Vorgang Kartenprüfung, Abrechnung und Guthabenanzeige (optional) von dem Gerät durchgeführt werden kann.

Der Kunde steckt seine Karte in einen Kundenkartenleser. Darauf wird die Karte von dem Gerät eigenständig überprüft. Dabei findet mindestens eine Authentifikation mit dem Sicherheitsmodul statt. Die Überprüfung erfolgt mit Hilfe der Steuerkarte und der Kommunikation mit dem Kundenkartenleser sowie dem Sicherheitsmodul.

Das Vorhandensein einer gültigen Chipkarte wird dann vom Display des Automaten oder von dem Display des Gerätes (optional) entsprechend angezeigt. Weiterhin wird aus der Karte das vorhandene Restguthaben ausgelesen und angezeigt.

Der Automat übergibt über eine V 24/V 28 Schnittstelle einen von der Karte abzubuchenden Betrag. Sofern die Karte über genügend Restguthaben verfügt, wird der Betrag von der Karte abgebucht und gleichzeitig wird ein entsprechender Zähler im Sicherheitsmodul erhöht. Dieser Zähler wird kryptografisch gesichert erhöht und repräsentiert jeweils die Summe aller von den Karten innerhalb eines Zeitraumes abgebuchter Geldbeträge.

Sofern auf der Karte nicht mehr genügend Restguthaben vorhanden ist, kann ggf. (optional) über die Telekommunikationsschnittstelle ein Verbindungsaufbau zu einem Rechner mit Sicherheitsmodul erfolgen, um weitere Geldbeträge auf die Chipkarte zu laden.

Die in dem Sicherheitsmodul abgespeicherten Zähler können über den eingebauten Telekommunikationsteil regelmäßig zur Abrechnung an eine Abrechnungszentrale übergeben werden.

Alternativ zur Übergabe der Zähler mittels Kommunikationsteil an eine Zentrale können die Zählerstände auch mittels einer speziellen Chipkarte übertragen werden, die über den Kundenkartenleser angesteuert wird.

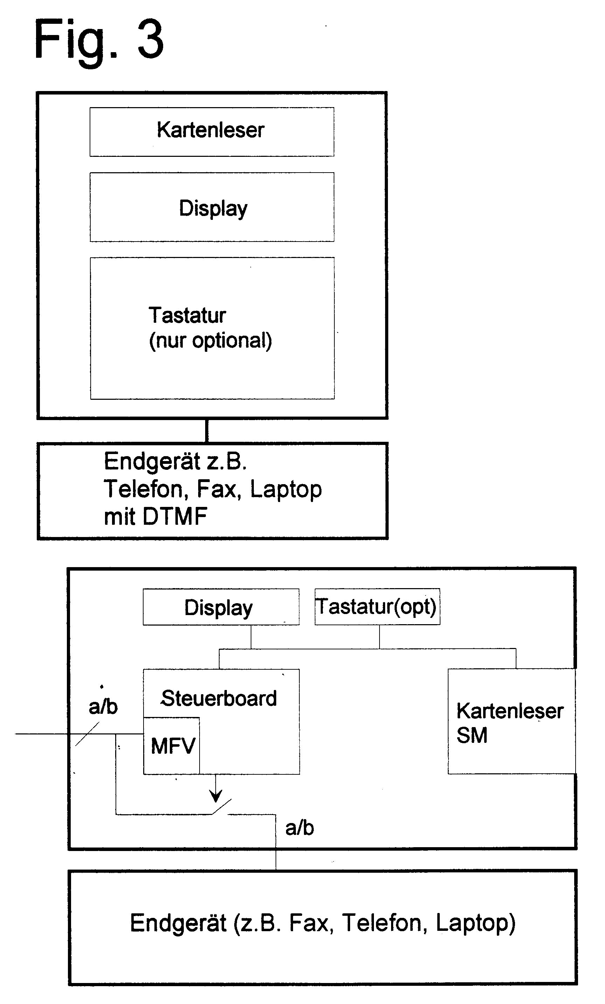

Die in Fig. 3 gezeigte Vorrichtung besteht aus einer Steuerkarte mit einem Zusatz für Datenübertragungs-Möglichkeiten (MFV-Mehrfrequenzwahl)und einem Steuerausgang zu einem Schalter in der a/b-Leitung zu einem Telefonteil mit Tastatur, mindestens zwei Kartenlesern, davon ein Kartenleser für die Kundenschnittstelle und ein zweiter Kartenleser für ein steckbares Sicherheitsmodul und einer Tastatur sowie (nur optional) einem Display. Auch bei dieser Vorrichtung werden die Sicherheitsfunktionen durch ein steckbares SM realisiert, wobei der komplette Vorgang Kartenprüfung, Abrechnung und Guthabenanzeige (optional) von dem Gerät durchgeführt werden kann.

Der Kunde steckt seine Karte in einen Kundenkartenleser. Darauf wird die Karte von dem Gerät eigenständig überprüft. Dabei findet mindestens eine Authentifikation mit dem Sicherheitsmodul statt. Die Überprüfung erfolgt mit Hilfe der Steuerkarte und der Kommunikation mit dem Kundenkartenleser sowie dem Sicherheitsmodul.

Das Vorhandensein einer gültigen Chipkarte wird dann vom Display des Automaten oder von dem Display des Gerätes (optional) entsprechend angezeigt. Weiterhin wird aus der Karte das vorhandene Restguthaben ausgelesen und angezeigt.

Die Vorrichtung gibt über den gesteuerten Schalter ein nachgeschaltetes Endgerät (z. B. Telefon, Fax, PC-Modem) frei, sobald eine gültige Karte mit Guthaben erkannt ist. Sie unterbricht die Verbindung wieder, wenn kein Guthaben mehr auf der Karte ist. Die Abbuchungen und die Aufsummierungen im Sicherheitsmodul SM werden hier in Form von Teilbeträgen vorgenommen, wobei die Tarifinformationen vom Fernmeldenetz (16 kHz) abgenommen werden oder durch Eigentarifierung im Gerät erfolgen kann. Die abgebuchten Geldbeträge werden wieder im Chip des Sicherheitsmoduls SM gesichert aufsummiert.

## Patentansprüche

1. Verfahren zur Zahlung aus Chipkarten mit Börsenfunktion, bei dem der Kartennutzer über ein begrenztes gespeichertes Guthaben bei Zahl- bzw. Auszahlvorgängen in Kassenautomaten mit vereinfachter Prozedur verfügen kann und bei dem eine Ergänzung des Guthabens über gesicherte Verbindungen und Prozeduren ermöglicht wird,
**dadurch gekennzeichnet**, daß
a. vom Betreiber des Kassenautomaten vor den Kassiervorgängen ein Sicherheitsmodul mit Chipkartenfunktionen in den/die Kassenautomaten eingesteckt wird und
b. bei jedem Kassiervorgang, bei dem ein Kartennutzer seine Chipkarte mit Börsenfunktion in einen Kassenautomaten einsteckt,
ba.werden zuerst Datenbereiche der Chipkarte für eine Plausibilitätskontrolle und die Prüfung des Restguthabens ausgelesen,
bb.danach wird eine Authentifikation mit dem Sicherheitsmodul durchgeführt,
bc.danach erfolgt eine ein-/mehrmalige Akzeptanzentscheidung und
bd.zuletzt wird der fällige bzw. eingegebene Geldbetrag aus der Chipkarte des Kartennutzers mit Hilfe einer Sicherheitsfunktion abgebucht und der Geldbetrag wird mit einer weiteren Sicherheitsfunktion einem Summenzähler für Geldbeträge im Sicherheitsmodul aufgebucht und
c. nach den Kassiervorgängen wird der Zählerstand des Sicherheitsmoduls mit Chipkartenfunktionen an eine Abrechnungszentrale übergeben.

2. Verfahren nach Anspruch 1, dadurch gekennzeichnet, daß die Zählerstände aus dem Sicherheitsmodul zusammen mit einer kryptografischen Prüfsumme ausgelesen und über eine Telekommunikationsschnittstelle durch Datenübertragung an eine Abrechnungszentrale, verschlüsselt übertragen werden.

3. Verfahren nach Anspruch 1, dadurch gekennzeichnet, daß die Zählerstände kryptografisch gesichert auf eine Chipkarte übertragen werden, die in den Kundenkartenleser eingesteckt wird.

4. Verfahren nach Anspruch 1 bis 3, dadurch gekennzeichnet, daß während der ein- bzw. mehrmaligen Akzeptanzentscheidung nach bc., abhängig von der Höhe des Restguthabens und des fälligen bzw. eingegebenen Geldbetrages, eine Fernmeldeverbindung über die Telekommunikationsschnittstelle zur Abrechnungszentrale aufgebaut wird und darüber, in kryptografisch gesicherter Form und mit elektronischer Unterschrift versehen, eine Ergänzung des Guthabens erfolgt.

5. Vorrichtung zur Zahlung aus Chipkarten mit Börsenfunktion, die wenigstens einen Kartenleser für die Chipkarte des Kartennutzers, einen Sicherheitsmodul, eine Datenschnittstelle, eine Verbindung zu einer Eingabeeinrichtung für Geldbeträge und eine Steuerkarte sowie vorzugsweise ein Anzeigedisplay enthält, **dadurch gekennzeichnet**, daß der Sicherheitsmodul einsteckbar ausgebildet ist und einen Chip mit Zähler enthält und daß die Steuerkarte, außer mit der Eingabeeinrichtung für Geldbeträge, auch mit einer Telekommunikationsschnittstelle verbunden ist.

6. Vorrichtung nach Anspruch 5, dadurch gekennzeichnet, daß eine Tastatur für einen einzugebenden Geldbetrag mit dem Kartenleser für die Chipkarte des Kartennutzers verbunden ist und daß die Steuerkarte den abzubuchenden Betrag von der Karte kryptografisch gesichert abbucht und in den Zähler des Sicherheitsmoduls aufsummiert.

7. Vorrichtung nach Anspruch 5, dadurch gekennzeichnet, daß als Eingabeeinrichtung für Geldbeträge ein Terminal einer Kassiereinrichtung ( z. B. Kasse, Waren- oder Fahrkartenautomat), an die Steuerkarte angeschlossen ist.

8. Vorrichtung nach Anspruch 5, dadurch gekennzeichnet, daß mit der Telekommunikationsschnittstelle ein fernmeldetechnisches Endgerät (Telefon, Fax, PC-Modem) über einen Schalter verbunden ist, welcher das Endgerät nach der Prüfung der Kartengültigkeit und des Guthabens freigibt und nach dem Aufbrauchen des Guthabens wieder abschaltet, und daß das Abbuchen von der Kundenchipkarte und das Einlesen in den Chip des Sicherheitsmoduls schrittweise, vom Tariftakt (vom Netz bzw. im Gerät erzeugt) gesteuert, erfolgt.
